# EUROPEAN PATENT APPLICATION

(11) **EP 4 535 722 A1**
(43) Date of publication of application: **09.04.2025**
(21) Application number: 23315377.4
(22) Date of filing: 02.10.2023
(51) Int. Cl.: H04L 9/40, H04L 9/32, H04W 4/70, H04W 12/069, H04W 4/35, H04W 12/041

(54) **INCREASING THE SECURITY OF AN FDO-COMPLIANT COMMUNICATION DEVICE**

(71) Applicant: THALES DIS FRANCE SAS, 92190 Meudon (FR)
(72) Inventor: Saksik, Remy, Montreal, H4P OA3 (CA); Gattone, Alain, 13390 Auriol (FR)
(74) Representative: Quintero Romero, Manuel

(57) **Abstract**

The invention provides a method for increasing the security of a FDO-compliant communication device, wherein the method comprises the following steps:
• providing a hardware-based secure element comprising an IoT SAFE applet; wherein the loT SAFE applet comprises at least one empty persistent container configured to store cryptographic data generated by the IoT SAFE applet;
• providing the FDO-compliant communication device;
• connecting the hardware-based secure element to the FDO-compliant communication device;
• generating, by the loT SAFE applet, a public and a private device key, the public and private keys being stored in the empty container of IoT SAFE applet;
• producing a device certificate by using the public and private device keys of the IoT SAFE applet; and
• computing a Device Initialization, DI, protocol to establish a device ownership chain.

## Description

### TECHNICAL FIELD

This invention relates to device initialization and secure late-binding onboarding schemes for Fast IDentity Online, FIDO, Device Onboard, FDO, protocols.

### BACKGROUND OF THE INVENTION

Internet-of-Things, IoT, device onboarding involves the installation of the deployed physical device and the setup of credentials so that it can securely communicate with its target cloud or platform. Today this onboarding process is usually done manually by a technician, a process that is slow, expensive, and insecure.

Normally, existing proprietary solutions require that the end customer be known at the time of the device is manufactured so that the device can be pre-configured. This creates friction and increases the cost in the supply chain. The Fast IDentity Online, FIDO, Alliance recently addressed this industry challenge and, as a result, released the FDO specification.

According to this FDO specification, either at the manufacturing stage of the loT device, or later in time, a FDO application is first installed on the loT device. Then, a root of trust key and FDO credentials are created inside the device to uniquely identify it, while web addresses are also placed inside the device for future connectivity and usage. Before shipping the device, a digital proof of ownership (so-called "ownership voucher") is created outside the device - this is a self-protected digital document allowing the owner(s) of the device to identify themselves later during the onboarding process.

As the loT device passes through the supply chain up to the owner, the ownership voucher file follows a parallel path. Then, these changes are registered by changing the ownership voucher (e.g., chain of signed public keys), without unboxing the device. Once the target cloud or platform is selected by the owner, first the ownership voucher is sent to that cloud or platform and, secondly, the ownership voucher is registered with a Rendezvous, RDV, server.

The first time the device is powered on, it connects to a network. That is, after the device boots up, it calls the RDV server that was pre-programmed during manufacturing. The device identifies itself (i.e., "discovery step") to the RDV server which, in response, provides back the target cloud or platform registered by the owner for that device.

The device then contacts this target cloud or platform and uses its key(s) and stored credentials to uniquely identify itself to the target cloud, which, in return, identifies itself using the ownership voucher. This allows creating a secure channel therebetween. The target cloud can now provision over the secure channel whatever credentials or policies are needed for correct device operation and lifecycle management, i.e., "late-binding" process.

Nevertheless, as it is, inventors have found pitfalls namely on the root of trust key(s). For instance, FDO specification suits well Intel^{®} Enhanced Privacy ID, EPID, as a root of trust. Briefly, EPID contains key(s) generated by Intel and the key(s) owner is federated by Intel. Thus, if these keys are hacked, there is an impact on the device security.

On another note, FDO gives certain flexibility for device deployment in other environments (with different security constraints) and, hence, proposes that key(s) be sealed by a Trusted Platform Module (TPM) or in the filesystem on the device. However, if TPMs (either weak or strong) are used as root of trust, it has a non-negligible impact on the loT device hardware supporting the TPM.

Therefore, there is a need in the loT industry for a secure, easy-to-use, and tamper-resistant root of trust that still suits well the FDO specification.

### SUMMARY OF THE INVENTION

The present invention provides a solution for all the aforementioned problems by a method for increasing the security of a FDO-compliant communication device according to claim 1, and a corresponding system according to claim 11. In dependent claims, preferred embodiments of the invention are defined.

In a first inventive aspect, the invention provides a method for increasing the security of a Fast IDentity Online, FIDO, Device Onboard, FDO, -compliant communication device. The method comprises the following steps:
- providing a hardware-based secure element comprising an Internet of Things, loT, Subscriber Identification Module, SIM, Applet For Secure End-to-End communication, SAFE, applet; wherein the loT SAFE applet comprises at least one empty persistent container configured to store cryptographic data generated by the loT SAFE applet;
- providing the FDO-compliant communication device;
- connecting the hardware-based secure element to the FDO-compliant communication device;
- generating, by the loT SAFE applet, a public and a private device key, the public and private keys being stored in the empty container of IoT SAFE applet;
- producing a device certificate by using the public and private device keys of the IoT SAFE applet; and
- computing a Device Initialization, DI, protocol to establish an device ownership chain.

The present invention increases the security of FDO protocols by delegating the cryptography operation(s) to an IoT SAFE applet throughout the DI process.

Unlike using proprietary (and potentially less trusted) secure elements, loT SAFE is a technical guidelines proposed by GSMA (*Groupe Spéciale Mobile Association*) providing a common, scalable and manageable mechanism to secure IoT data communications.

loT SAFE leverages a hardware-based secure element (e.g., a SIM), as a root of trust, to establish end-to-end (e.g., chip-to-cloud) communication for loT products and services. The SIM, in any form factor, is best suited to function as the hardware root of trust as it already has advanced security and cryptographic features and is a fully standardised secure element, enabling interoperability across different vendors and consistent use by loT device manufacturers.

Throughout this entire document, FDO specification will refer to the "FIDO Device Onboard Specification", Review Draft, December 02, 2020; which content is incorporated herein by reference. Similarly, throughout this entire document, loT SAFE refers to "Common Implementation Guide to Using the SIM as a 'Root of Trust' to Secure loT Applications", Version 1.0, December 03, 2019; which content is incorporated herein by reference.

According to the present invention, advantageously, the hardware-based secure elements comprising loT SAFE applets can be mass produced by a certified industrial grade vendor in its own secure facility. For instance, SIM card vendors (e.g., M2M, in any form factor) can produce these multi-purpose loT SAFE-enabled hardware-based secure elements at high throughput since there is no client customization or personalization.

According to the invention, the loT SAFE-enabled hardware-based secure element is a tamper-resistant and/or tamper-proof element made of a dedicated silicon chip, hosting a secure OS and applications such as, at least, an loT SAFE applet. Preferably, the loT SAFE applet is a "type I applet" as it uses asymmetric keys to manage the digital certificates and setup a mutual authentication for secure connection. Alike a SIM, the loT SAFE-enabled hardware-based secure element may also host a UICC (Universal Integrated Circuit Card) profile for mobile network authentication.

Still according to the invention, the hardware-based secure element comprising the loT SAFE applet is multi-purpose thanks to the fact it comprises empty persistent container(s) configured to securely store cryptographic data generated by the loT SAFE applet itself. This self-generated cryptographic data is a public and a private key (e.g., ECDSA-based, Elliptic Curve Digital Signature Algorithm) and, in optional embodiments, a HMAC secret (e.g., AES-based, Advanced Encryption Standard) as it will be described below. Once generated, the private key and, optionally, the HMAC secret never leaves the container(s).

Later on, a device manufacturer can receive these multi-purpose loT SAFE-enabled hardware-based secure elements and connect them to loT communication devices at its own secure facility. The loT communication devices are configured with an FDO application giving rise to the FDO-compliant communication devices. Else, in a less preferred embodiment, the FDO application can be installed within the hardware-based secure element itself (either by the device manufacturer or the card vendor). Be as it may, the FDO application is configured to interface the loT SAFE applet to request performing crypto operations through GSMA-defined commands.

At the secure facility of the manufacturer, there is a manufacturer server comprising an applet communication module configured to communicate through GSMA-type commands with the loT SAFE applet already integrated in the FDO-compliant communication device. The applet communication module then requests the loT SAFE applet to generate (e.g., on the fly) a public and a private device key. Once generated, the loT SAFE applet store these keys in one of the empty container(s) intended for this purpose. Advantageously, the manufacturer does not control these keys and simply requests the loT SAFE applet a copy of the device public key.

In a particular embodiment, the applet communication module also requests (e.g., through an openSSL command via PKCS#11 interface) the IoT SAFE applet to create a Certificate Signing Request, CSR. Then, the applet communication module further requests the loT SAFE applet to sign the data of the CSR with the device private key. Preferably, the generation of the ECDSA key pair and the signature of the CSR take place inside the loT SAFE applet already integrated into the FDO-compliant communication device.

After producing the signed CSR, it is retrieved by the manufacturer server which, either directly or indirectly (e.g., through a trusted Certificate Authority such as an loT SAFE server administrator), generates a device certificate chain. For generating the device certificate, the manufacturer server uses e.g., the CSR as information identifying the device (or part thereof), a manufacturer public key and a manufacturer certificate for identifying the beginning of the device certificate chain. The outcome may be finally self-signed with the manufacturer private key and loaded to an IoT SAFE applet container.

In a particular embodiment, the applet communication module forms part of the FDO application installed in the FDO-compliant communication device, so that the manufacturer interfaces with the loT SAFE applet through the hosting device.

The manufacturer also comprises (e.g., securely on premises) a DI module configured to compute a DI protocol. The goal of DI protocol is to prepare the FDO-compliant communication device and to establish the device ownership chain. This DI protocol interfaces, either directly or through the hosting FDO-compliant communicating device, the loT SAFE applet and uses its device key pair as well as a (HMAC) secret.

The device certificate is finally used for creating an ownership voucher. It is to mention that, according to FDO spec., DI protocol is a non-normative protocol that can be replaced as long as the same end-state is achieved. That's why this invention is still fully compliant with both FDO spec., and loT SAFE spec.

In a preferred embodiment, the DI module (optionally, together with the applet communication module) is the "FDO Manufacturing Component" as defined by FDO spec. Thus, either the FDO application, a middleware, or other piece of software is able to determine the IP address for e.g., a manufacturing support station of the manufacturer. Then, the FDO-enabled communication device is able to attach to a local network within the manufacturer factory.

In a particular embodiment, the applet communication module requests the loT SAFE applet to further generate a hash-based message authentication code, HMAC, secret to be persistently stored in a second empty persistent container of the loT SAFE applet. This secret will be used for the ownership voucher to detect whether the FDO-compliant communication devices has been re-programmed after it left the factory.

The HMAC secret of the loT SAFE applet is used to create a HMAC of the device certificate previously loaded therein and which is also referenced in the header of the ownership voucher. In the process, it is assumed that the manufacturer matched the device certificate information to the required DI protocol fields. Since the HMAC can only be verified by the IoT SAFE applet, it is used to detect whether the FDO-enabled communication device has been re-programmed after it left the manufacturer secure factory. Namely, the DI module passes the ownership voucher header field's contents (i.e., the device certificate) on the IoT SAFE applet to be hashed (and/or combined with a secret) which is returned back to the DI module for being included into the ownership voucher. Hence, the device ownership chain is created.

As mentioned, the ownership voucher is a structured digital document that links the manufacturer with the current owner. It is formed as a chain of signed public keys, each signature of a public key authorizing the possessor of the corresponding private key to take ownership of the device or pass ownership through another link in the chain. For instance, the manufacturer signs the public key of a distributor, which signs the public key of a retailer, which in turn signs the public key of the owner.

At the end of the DI protocol, but not necessarily as a result thereof, the FDO-manufacturing device may comprise other persistent device credentials entries in file(s) such as a description of the GUID, a text string with description of the device, a RDV server info, a device status, credentials identifying the manufacturer public key, etc. The GUID is not necessarily secret and can be even visible as a bar code on the shipping box or on the bill of lading as it can be used to identify the device to its new owner. The GUID may also appear in the ownership voucher and is known by the DI module (e.g., FDO Manufacturing Component).

At the end of DI protocol, the FDO-enabled communication device is considered as ready to be powered off and boxed for shipment since no further network attachment is necessary.

As mentioned, by the time the FDO-enabled communication device is powered on for the first time, it is automatically programmed to perform a Transfer Ownership 1 (TO1) protocol in order to connect to the RDV server. It is assumed that the owner onboarding service server has already performed the Transfer Ownership 0 (TO0) protocol to declare device ownership and map its GUID to the corresponding owner IP address. That is, by the time the device contacts the RDV server using TO1 protocol, the RDV server should have an entry in its database associating (e.g., temporarily) the GUID with an owner service "blob" containing e.g., DNS name, IP address, port, protocol.

Following TO1 protocol, the RDV server sends back the associated blob and, then, device can perform TO2 protocol wherein it contacts the owner for its actual onboarding (i.e., it contacts the owner onboarding service server).

According to an advantageous embodiment of the present invention, upon receiving this provisioning request (i.e., TO2 protocol), the current owner (e.g., owner onboarding service server) first contacts a scripting service configured to prepare the requested payload (e.g., the security profile) in a manner that it can be only decrypted by the loT SAFE applet.

As per today's situation, the owner server is responsible for generating the payload to provision the device for its transport to the device. This poses a risks since the owner is fully aware of keys, certificates, and other data necessary to prepare a payload and, if hacked, the attacker can fully take over the FDO-enabled communication device.

On the contrary, advantageously, according to embodiments of the present invention, the payload is strongly / cryptographically paired with the loT SAFE and can be provisioned thereto. For instance, thanks to the fact that the loT SAFE applet contains the HMAC secret to verify the integrity of the ownership voucher.

Preferably, together with the payload generating request, the owner sends to the scripting service identification data of the loT SAFE applet and/or of the FDO-compliant communication device attached thereto to uniquely identify, among others, the device public key within the loT SAFE applet and generate (and encrypt) the appropriate script(s) (e.g., security profile). The owner server (e.g., the owner onboarding service server) may comprise an loT SAFE plugin to securely interface the IoT SAFE scripting service (e.g., on a subscription basis). Once the encrypted payload be generated, the owner server (e.g., through the loT SAFE plugin) receives it and transport it to the loT SAFE applet through a HTTPS-based (Hypertext Transfer Protocol Secure) communication channel over TLS (Transport Layer Security) protocol.

Advantageously, by delegating the data preparation and encryption to the scripting service, the owner has limited (or null) knowledge about how it was generated, by whom, etc., and will simply forward it to the FDO-compliant communication device to arrive eventually to the loT SAFE applet. The applet is then configured to verify the legit origin of the encrypted script and decrypt it while possibly creating (or use) other containers within the applet to store further keys, secrets, and certificates to establish or re-open secure channel(s) as indicated by the owner.

In a preferred embodiment, the encrypted scripts or payloads are conveyed using Secure Channel Protocol "3" or "1 1" (SCP3, SCP11), according to Global Platform standards.

In a second inventive aspect, the invention provides system for increasing the security of a FDO-compliant communication device, wherein the system comprises:
- the FDO-compliant communication device operatively connected to a hardware-based secure element comprising an IoT SAFE applet;
- a manufacturer server comprising
   ∘ an applet communication module configured to communicate with the loT SAFE applet of the FDO-compliant communication device, wherein the applet communication module is configured to request the loT SAFE applet to generate a public and a private device key and store them in an empty container thereof; and
   ∘ means (e.g., as Certification Authority module) for producing a device certificate by using the public and private device keys of the IoT SAFE applet;
   ∘ a DI module configured to compute a DI protocol to establish an device ownership chain.

In a particular embodiment, the hardware-based secure element comprising the loT SAFE applet has a form factor of a removable SIM card, an embedded SIM chip or an integrated SIM element. Advantageously, there is no need for a dedicated TPM, which would require hardware modifications to ensure integrability. Thus, the underlying idea is that the SIM card where loT SAFE applet runs is inexpensive and easily integrable with the FDO-enabled communication device for assuring connectivity and security.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig. 1: shows a system for increasing the security of a FDO-compliant communication device during manufacturing and setup, according to some embodiments of the invention.
- Fig. 2: shows a system for increasing the security of a FDO-compliant communication device, especially during onboarding, according to some embodiments of the invention.

### DETAILED DESCRIPTION OF THE INVENTION

As it will be appreciated by one skilled in the art, aspects of the present invention may be embodied as a method steps for increasing the security of a FDO-compliant communication device, and as a corresponding system.

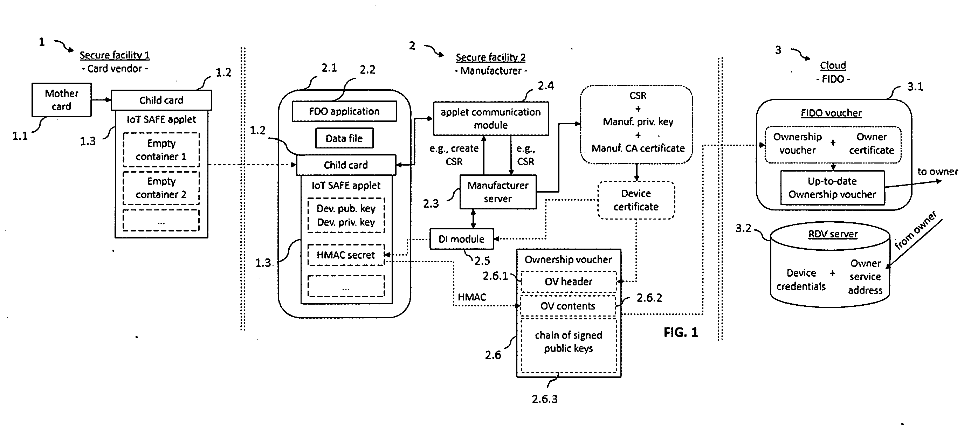

**Figure 1** depicts that the hardware-based secure element 1.2 with the loT SAFE applet 1.3 is first manufactured at vendor's secure facility ("secure facility 1"). At this facility 1, there is a standard cloning procedure departing from a mother card 1.1 comprising a certificate authority certificate, a master key and a loT SAFE applet which produces a set of similar child cards 1.2 with diversified keys (from the master key) and a vendor's profile embedded. These diversified keys allow identifying uniquely (or in batches of) produced child cards 1.2.

Throughout these examples, the terms "hardware-based secure element" 1.2 and "card" will be used interchangeably.

Key-diversification is a technique often used in working with smart cards. In order to secure interactions with a population of cards, a key-generating key is used with some data unique to a card to derive (or "diversify") keys for use with that card. The data is preferably the card serial number. Since the data is often public, the key-generating key process should take place at facilities with a high degree of security or the interactions with the whole population of cards could be placed in jeopardy.

After cloning step, the hardware-based secure element 1.2 comprises the loT SAFE applet 1.3 and empty persistent container(s) configured to securely store cryptographic data self-generated by the loT SAFE applet itself. Once finished, the cards are ready to be shipped to the device manufacturer 2 at a different secure facility.

The device manufacturer 2 receives these multi-purpose loT SAFE-enabled hardware-based secure elements 1.2 and connect them to IoT communication devices (e.g., surveillance cameras, so-called CCTV) at its own secure facility. The IoT communication devices are pre-configured with an FDO application 2.2 and a data file stored in one or more memories giving rise to the FDO-compliant communication devices 2.1. The FDO application allows the communication device to successfully perform the require FDO protocols by correctly interfacing the different server(s).

At manufacturer's facility 2, there is manufacturer server 2.3 (or group of servers giving rise to the same capabilities) orchestrating the manufacturing process. This manufacturer server communicates with an applet communication module 2.4 configured to communicate through GSMA-type commands (i.e., APDU-based) with the loT SAFE applet already integrated, or not, in the FDO-compliant communication device. If already integrated, this communication between the applet communication module and the loT SAFE applet may occur through the FDO application 2.2.

The applet communication module 2.4 requests the loT SAFE applet 1.3 to generate (e.g., on the fly) a public device key and a private device key and to store these keys in one of the empty container(s) intended for this purpose. Furthermore, the loT SAFE applet 1.3 generates an HMAC secret to be persistently stored in a different empty persistent container. These commands are known and covered by GSMA spec.

The applet communication module 2.4 also requests (or forwards from the manufacturer server 2.3) the loT SAFE applet to create and sign a CSR. This signed CSR is sent back to the manufacturer server 2.3 which forwards it to an IoT SAFE server administrator (not shown), together with the manufacturer public key and the manufacturer certificate, for the generation of the device certificate. The outcome may be finally self-signed by the manufacturer private key and loaded to an loT SAFE applet container. This device certificate is to be included in the ownership voucher header 2.6.1 among other field's contents 2.6.2, 2.6.3.

The manufacturer also comprises a DI module 2.5 (e.g., a "FDO Manufacturing Component") in communication with the manufacturer server 2.3 and configured to compute a DI protocol to establish the device ownership chain. The FDO-enabled communication device 2.1 is able to attach to a local network within the manufacturer factory 2 to communicate with the DI module 2.5. The DI protocol establishes the device certificate as the first step in an device ownership chain so, at the end, this device certificate is used in the ownership voucher 2.6 that will be passed on up to the owner to identify itself during TO2 protocol.

During DI protocol, the contents of the device certificate are passed back through the loT SAFE applet to create a HMAC (using the HMAC secret) which, as mentioned, will be part of the ownership voucher contents 2.6.2.

In the process, it is assumed that the manufacturer matched the device certificate information to the required DI protocol fields. Since the HMAC can only be verified by the IoT SAFE applet 1.3, it is used to detect whether the FDO-enabled communication device 2.1 has been re-programmed after it left the manufacturer secure factory 2. Namely, the DI module passes the ownership voucher header 2.6.1 field's contents on the IoT SAFE applet to be hashed (and/or combined with a secret) which is returned back to the DI module for being included into the ownership voucher. Hence, the device ownership chain is started.

At the end of the DI protocol, but not necessarily as a result thereof, the FDO-manufacturing device 2.1 may comprise (e.g., in the data file) other persistent device credentials entries such as a description of the GUID, a text string with description of the device, a RDV server info, a device status, credentials identifying the manufacturer public key, etc. These can be either provisioned during FDO application installation or later on in time.

Subsequently, the ownership voucher 2.6 will be transferred through the value chain up to the end owner (when known) thus forming a structured digital document that links the manufacturer with the owner. When the owner is known, his certificate will be annexed to the existing ownership voucher giving rise to the "up-to-date ownership voucher" shown in figure 1.

At this point, the owner owns the up-to-date ownership voucher and provide the FIDO server 3.1, e.g., through a web-browser or dedicated application in a different device, with the manner for the FDO-enabled communication device 2.1 to contact its service owner server 4. This information is stored (e.g., permanently, temporarily, or conditionally) by the RDV server 3.2 in association with the actual FDO-enabled communication device (e.g., identifiable through its GUID).

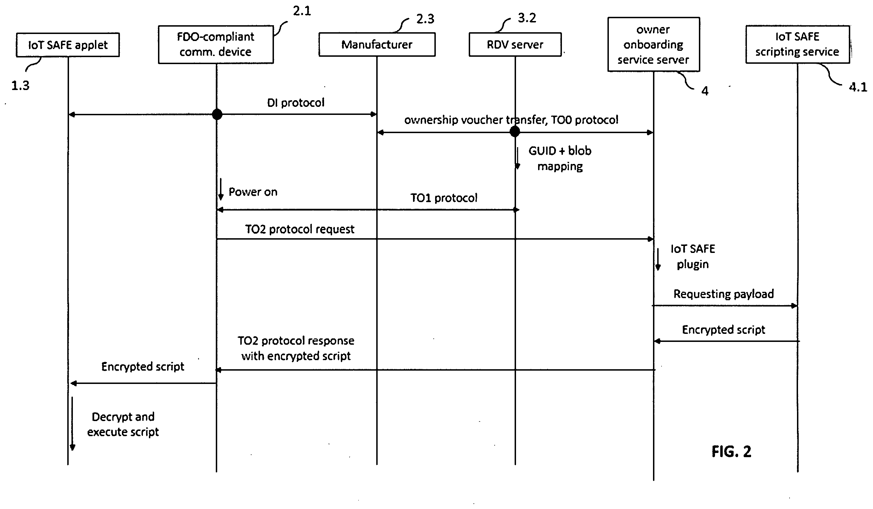

In **figure 2** it is depicted a schematic workflow with the main steps of embodiments about the device initialization and onboarding processes according to the present invention.

First, the manufacturer 2.3 (i.e., through the DI module 2.5) performs a DI protocol with the FDO-compliant communication device 2.1 comprising the hardware-based secure element 1.2 with the loT SAFE applet 1.3 as previously described. The device certificate is transferred to FIDO servers 3.1 to register the ownership voucher 2.6 chain. Then, the device 2.1 is shipped.

Later on, when the owner acquires and unboxes the FDO-enabled communication device (not shown), it sets up new ownership in the ownership voucher 2.6 and contacts through a dedicated platform the FDO server 3.1 to configure the endpoint of its owner service server in the RDV server 3.2 such as DNS name, IP address, port, and protocol(s). The RDV server 3.2 registers this in association with the GUID (this GUID was visible e.g., in the packaging). This step is compliant with TO0 protocol.

Then, when the owner switches or powers on the FDO-compliant communication device, it is pre-programmed to contact and authenticate to the RDV server 3.2 automatically. During TO1 protocol, the RDV server 3.2 verifies the identity of the device and, in response, sends back the registered blob from the owner service server 4. The FDO-compliant communication device can authenticate to the servers due to the hosted device private key in the loT SAFE applet and, optionally, through the HMAC secret allowing to re-compute identification data.

Right after, the FDO-communication device 2.1 initializes the TO2 protocol (again, authenticating itself to the owner onboarding service server 4) in order to be provisioned accordingly. At this point, unlike common practice where this owner onboarding service server 4 both prepares and transports the requested payload, it will instead contact an IoT SAFE scripting service server 4.1. This contact may occur, optionally, through an loT SAFE plugin. For instance, the owner onboarding service server 4 provides information of which FDO-compliant communication device 2.1 got connected to it, eventually sending a challenging to the loT SAFE applet 1.3. Advantageously, by pursing this delegation, the owner onboarding service server 4 will not be able to look at the data that has been prepared by the back end. It insures confidentiality and privacy.

This IoT SAFE plug-in is configured to contact and instruct the loT SAFE scripting server 4.1 to generate the specific payload for the device 2.1 to be provisioned. The loT SAFE server receives the requests, retrieves the necessary data to identify the hosted card 1.2, generates the payload and encrypts it by using any known protocol. The encrypted payload or script is sent back to the owner onboarding service server (not able to decrypt it) and solely in charge of transporting it back to the FDO-compliant communication device as part of the TO2 protocol. This encrypted payload is passed on the loT SAFE applet 1.3 which will decrypt it and execute it accordingly.

After executing the script, the FDO-compliant communication device 2.1 knows is considered as late-binding provisioned and is ready to properly function: e.g., start transmitting data or video feed, or secure GPS location of the device, etc. to the correct address.

## Claims

1. A method for increasing the security of a Fast IDentity Online, FIDO, Device Onboard, FDO, -compliant communication device (2.1), wherein the method comprises the following steps:
- providing a hardware-based secure element (1.2) comprising an Internet of Things, loT, Subscriber Identification Module, SIM, Applet For Secure End-to-End communication, SAFE, applet (1.3); wherein the loT SAFE applet comprises at least one empty persistent container configured to store cryptographic data generated by the IoT SAFE applet;
- providing the FDO-compliant communication device (2.1);
- connecting the hardware-based secure element to the FDO-compliant communication device;
- generating, by the loT SAFE applet (1.3), a public and a private device key, the public and private keys being stored in the empty container of loT SAFE applet (1.3);
- producing a device certificate by using the public and private device keys of the loT SAFE applet; and
- computing a Device Initialization, DI, protocol to establish a device ownership chain.

2. The method according to claim 1, wherein for producing the device certificate, the loT SAFE applet firstly creates a Certificate Signing Request, CSR, and signs the CSR data with the device private key.

3. The method according to claim 2, wherein the device certificate is produced based on the CSR, a manufacturer public key and a manufacturer certificate; the device certificate being then loaded into the IoT SAFE applet (1.3).

4. The method according to any of claims 1 to 3, wherein the loT SAFE applet further generates a Hash-based message authentication code, HMAC, secret to be persistently stored in a second empty persistent container of the loT SAFE applet, wherein the HMAC secret is used during the DI protocol.

5. The method according to claim 4, wherein the DI protocol uses the HMAC secret to compute a HMAC of device certificate; wherein the device certificate is referenced in the header (2.6.1) of a ownership voucher (2.6) and the HMAC is included in the ownership voucher contents (2.6.2) to establish the device ownership chain.

6. The method according to any of claims 1 to 5, wherein the hardware-based secure element (1.2) comprising the IoT SAFE applet (1.3) with at least one empty container is mass produced at a first secure facility (1).

7. The method according to any of claims 1 to 6, wherein the FDO-compliant' communication device (2.1) is operatively connected to the hardware-based secure element (1.2) so as to compute the DI protocol at a second secure facility (2), such as a device manufacturer secure facility.

8. The method according to any of claims 1 to 7, wherein the device certificate is transferred to a FIDO server (3) for ownership voucher (2.6) registration, this ownership voucher (2.6) being adapted to pass on a new device owner; wherein this ownership voucher transfer is adapted to be recorded in at least a Rendez Vous, RDV, server (3.2).

9. The method according to claim 8, wherein upon switching on, the FDO-compliant communication device (2.1) is configured to contact the RDV server (3.2) to get the contacting details of the current device owner (4), the FDO-compliant communication device sending to the current device owner (4) a provisioning request.

10. The method according to claim 9, wherein upon receiving the provisioning request, the current device owner (4) contacts a scripting service (4.1) configured to prepare a payload that can be only decrypted by the loT SAFE applet (1.3).

11. The method according to any of claims 9 or 10, wherein in response to the provisioning request, the current device owner (4) sends back the device security profile.

12. The method according to claims 10 and 11, wherein the current device owner (4) sends back to the FDO-compliant communication device (2.1) the encrypted payload with the security profile that is decrypted and securely executed by the loT SAFE applet (1.3).

13. A system for increasing the security of a FDO-compliant communication device (2.1), wherein the system comprises:
- the FDO-compliant communication device (2.1) operatively connected to a hardware-based secure element (1.2) comprising an IoT SAFE applet (1.3);
- a manufacturer server (2.3) comprising
∘ an applet communication module (2.4) configured to communicate with the loT SAFE applet (1.3) of the FDO-compliant communication device (2.1), wherein the applet communication module (2.4) is configured to request the loT SAFE applet to generate a public and a private device key and store them in an empty container thereof; and
o means for producing a device certificate by using the public and private device keys of the loT SAFE applet;
∘ a DI module (2.5) configured to compute a DI protocol to establish an device ownership chain.

14. The system according to claim 13, wherein the hardware-based secure element (1.2) comprising the loT SAFE applet (1.3) has a form factor of a removable SIM card, an embedded SIM chip or an integrated SIM element.

15. The system according to any of claims 13 or 14, further comprising a FIDO server (3.1) configured to update the ownership voucher, the FIDO server comprising a RDV server (3.2) registering ownership voucher transfer of FDO-compliant communication devices associated with contact details of new device owner (4).

16. The system according to any of claims 13 to 15, further comprising a scripting service server (4.1) configured to prepare and encrypt a payload that can be only decrypted by the loT SAFE applet (1.3) of the FDO-compliant communication device (2.1) owned by the current device owner (4);
wherein the loT SAFE applet is further configured to decrypt and securely execute the encrypted payload received through the FDO-compliant communication device.
